# EUROPEAN PATENT SPECIFICATION

(11) **EP 4 455 584 B1**
(45) Date of publication and mention of the grant of the patent: **23.09.2026**
(21) Application number: 24197084.7
(22) Date of filing: 03.04.2020
(51) Int. Cl.: F25D 11/00, A23B 7/152

(54) **REFRIGERATION UNIT WITH ATMOSPHERE CONTROL SYSTEM**
KÜHLEINHEIT MIT ATMOSPHÄRENSTEUERSYSTEM
UNITÉ DE RÉFRIGÉRATION AVEC SYSTÈME DE RÉGULATION D'ATMOSPHÈRE

(30) Priority: 12.04.2019 US 201962833066 P
(43) Date of publication of application: 30.10.2024
(62) Document number(s) of the earlier application(s) in accordance with Art. 76 EPC: 20168005.5 / 3 722 710
(73) Proprietor: Carrier Corporation, Palm Beach Gardens, FL 33418 (US)
(72) Inventor: POSTGATE, Farley William, East Syracuse, 13057 (US); SPEARING, Robert C., East Syracuse, 13057 (US); FLEMING, Malcolm N., Syracuse, 13221 (US); CRESSWELL, Kenneth E., Syracuse, 13221 (US); HOFSDAL, Gilbert B., Syracuse, 13221 (US); KRAUSE, Paul J., Syracuse, 13221 (US)
(74) Representative: Dehns

(56) References cited:
- EP-A1- 3 054 244
- EP-A1- 3 109 576
- US-A- 4 829 774

## Description

The subject matter disclosed herein relates to an atmosphere control system for a refrigerated container, and specifically to a system for regulating the atmosphere (e.g., amounts of nitrogen, oxygen, and/or carbon dioxide) inside a refrigerated container resulting in an atmospheric composition that extends post-harvest shelf life or quality of perishables, such as fruits, vegetables, pharmaceuticals, etc.

A typical refrigerated cargo container, such as those utilized to transport cargo via sea, rail or road, is a container modified to include a refrigeration unit located at one end of the container. The refrigeration unit includes a compressor, condenser, expansion valve and evaporator. A volume of refrigerant circulates throughout the refrigeration unit, and one or more evaporator fans of the refrigeration unit blow a flow of supply air across the evaporator thereby cooling the supply air and forcing it out into the container.

An atmosphere control system controls the amount of oxygen and carbon dioxide inside the refrigerated container to, for example, change the rate of ripening of produce stored in the container. The atmosphere control system may control the amount of oxygen (O2) and carbon dioxide (CO2) in the container.

EP 3054244 A1 discloses a refrigeration unit for a container adapted to detect and control oxygen concentration in the interior of the container.

US 4829774 A discloses a transportable refrigerating container in which the atmosphere is passed over a circulating device containing separating means for water and gases and refrigerating and humidifying means.

EP 3109576 A1 discloses a container refrigeration apparatus for cooling air in a container adapted to measure and control oxygen concentration of the air in the container.

The present invention provides a refrigeration unit for use with a container, wherein the refrigeration unit includes a compressor, a condenser, an expansion device and an evaporator configured to circulate a refrigerant; a condenser section housing the compressor and the condenser; an evaporator section housing the evaporator; an atmosphere control system including an air compressor configured to generate compressed air; a separator configured to receive the compressed air and output nitrogen; a valve between the air compressor and the separator; the air compressor located in the condenser section; the separator located in the evaporator section a controller configured to control the valve; wherein the controller is configured to control the compressor; wherein the valve, in a closed position, directs compressed air to the separator; and wherein the valve, in an open position, directs compressed air to the container. The refrigeration unit may include a sensor in the evaporator section, the sensor may be configured to measure a level of a gas in the container; and the controller may be configured to move the valve between the open position and the closed position in response to the level of the gas in the container.

The atmosphere control system may comprise a heat exchanger positioned between the air compressor and the separator, and the heat exchanger may be configured to cool the compressed air from the air compressor.

The atmosphere control system may comprise a water separator between the heat exchanger and the separator.

The atmosphere control system may comprise at least one filter between the water separator and the separator.

The at least one filter may be located in the condenser section or in the evaporator section.

These features and elements as well as the operation thereof will become more apparent in light of the following description and the accompanying drawings. It should be understood, however, that the following description and drawings are intended to be illustrative and explanatory in nature and non-limiting.

The present disclosure is illustrated by way of example and not limited in the accompanying figures in which like reference numerals indicate similar elements.
FIG. 1 depicts a refrigerated container.
FIG. 2 depicts a refrigeration unit.
FIG. 3 depicts a refrigeration unit with an atmosphere control system.
FIG. 4 depicts an atmosphere control system.
FIG. 5 depicts an atmosphere control system.

The detailed description explains embodiments of the invention, together with advantages and features, by way of example with reference to the drawings.

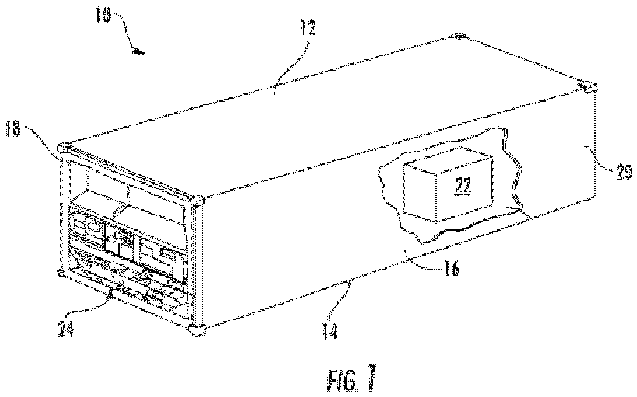

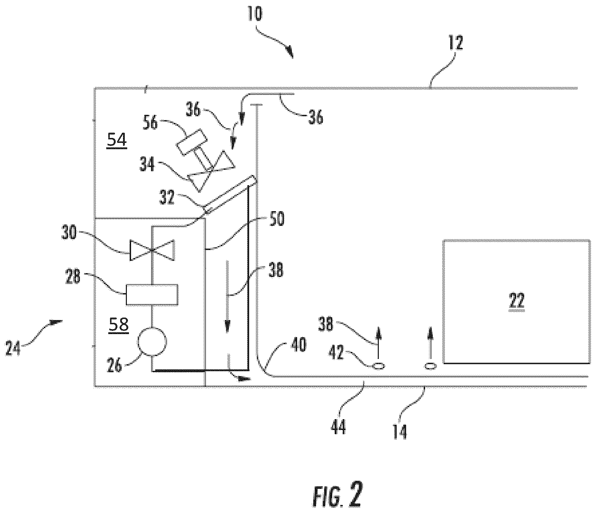

Shown in FIG. 1 is a refrigerated container 10. The container 10 has a generally rectangular construction, with a top wall 12, a directly opposed bottom wall 14, opposed side walls 16 and a front wall 18. The container 10 further includes a door or doors (not shown) at a rear wall 20, opposite the front wall 18. The container 10 is configured to maintain a cargo 22 located inside the container 10 at a selected temperature through the use of a refrigeration unit 24 located at the container 10. The container 10 is mobile and is utilized to transport the cargo 22 via, for example, a truck, a train or a ship. The container 10 may be integrated with a trailer or chassis. The refrigeration unit 24 is located at the front wall 18, and includes a compressor 26, a condenser 28, an expansion device 30 (e.g., a TXV or EXV), an evaporator 32 and an evaporator fan 34 (shown in FIG. 2), as well as other ancillary components.

Referring to FIG. 2, the refrigeration unit 24 flows return air 36 across the evaporator 32 via the evaporator fan 34, thus cooling the return air 36 to a selected temperature and urges the cooled return airflow 36, now referred to as supply air 38, through a refrigeration unit outlet 40 into the container 10 via, for example, openings 42 in one or more T-bars 44 extending along the bottom wall 14 of the container 10 to cool the cargo 22.

The refrigeration unit 24 is separated into an evaporator section 54 containing the evaporator 32, the evaporator fan 34 and an evaporator fan motor 56 and a condenser section 58 containing the compressor 26, the condenser 28 and the expansion device 30. The expansion device 30 may be located in the evaporator section 54. The evaporator section 54, which may be located above the condenser section 58, is separated from the condenser section 58 by a panel 50 that extends across the refrigeration unit 24. The condenser section 58 is exposed to ambient air and may be covered by panels having openings formed therein. In operation, refrigerant is circulated in serial fashion through the compressor 26, the condenser 28, the expansion device 30, the evaporator 32 and back to the compressor 26. It is understood that the refrigeration unit 24 may include additional components (e.g., economizer, receiver, SMV, etc.) that are not shown.

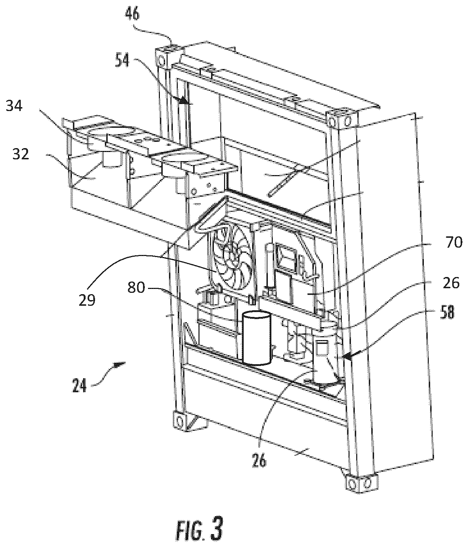

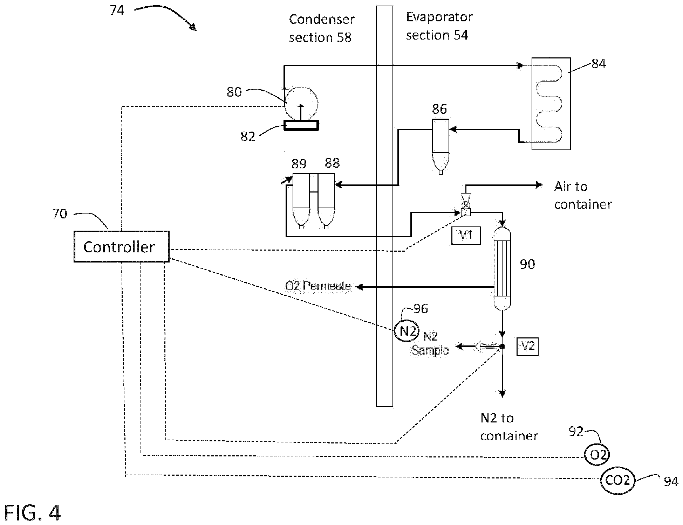

Referring now to FIG. 3, the refrigeration unit 24 includes a housing 46 to contain components of the refrigeration unit 24. Optionally, the housing 46 is separate and distinct from the container 10, or alternatively, the housing 46 is an integral part of the container 10. A condenser fan 29 is driven by a condenser motor (not shown) to drive air over the condenser 28 and discharge the air outside the refrigeration unit 24. The condenser 28 may be radially disposed about the condenser fan 29. A controller 70 controls operation of the refrigeration unit 24, for example, by controlling the compressor 26 (e.g., on/off/variable speed), evaporator fan motor 56 (e.g., on/off/variable speed), condenser fan motor (e.g., on/off/variable speed), etc. The controller 70 may be implemented user a processor-based device including a microprocessor, memory, user interface, I/O inputs, etc. The controller 70 controls components of the refrigeration unit 24 to maintain a desired temperature within the interior of the container 10, as known in the art. An air compressor 80 is located in the condenser section 58. The air compressor 80 is a component of an atmosphere control system 74 (FIG. 4) that operates to regulate atmosphere (e.g., oxygen and carbon dioxide) in the interior of the container 10.

FIG. 4 depicts the atmosphere control system 74 in an example embodiment. The atmosphere control system 74 operates to control levels of at least one gas inside the container 10. In an embodiment, the atmosphere control system 74 operates to control levels of oxygen and/or carbon dioxide. The atmosphere control system 74 includes the air compressor 80 located in the condenser section 58 and thus outside the interior of the container 10. The controller 70 may turn on the air compressor 80 by sending a signal to a relay or contactor that applies power to the air compressor 80. When turned on, the air compressor 80 draws air from outside the container 10 through a first filter 82 (e.g., a 50 micron particulate filter). The compressed air produced by the air compressor 80 flows from the condenser section 58 into the evaporator section 54 to a heat exchanger 84. The heat exchanger may be an air-cooled heat exchanger of various types (e.g., round tube plate fin, microchannel, etc.). At heat exchanger 84, the compressed air is cooled to facilitate water removal. From the heat exchanger 84, the compressed air flows to a water separator 86 where water is removed. From the water separator 86, the compressed air flows to a second filter 88 (e.g., a 5 micron particulate filter) and a third filter 89 (e.g., a 0.01 micron particulate filter). The second filter 88 and the third filter 89 may be located in the condenser section or the evaporator section 54.

From the second filter 88 and the third filter 89, the compressed air flows to a first valve, V1. The first valve V1 has two outlets, which can be controlled by controller 70. When the first valve V1 is in a first position (e.g., an open position when energized), the compressed air is output from the first valve V1 to the interior of the container 10. The first valve V1 may be located to provide the air upstream of the evaporator 32. When the first valve V1 is in a second position (e.g., a closed position when not energized), the compressed air is directed to a separator 90. The separator 90 may be a membrane separator that generates an output of highly pure, separated nitrogen upstream of evaporator 32. Other atmospheric gases, including oxygen, argon and carbon dioxide, are vented to the condenser section 58 and outside of the refrigeration unit 24. The nitrogen from separator 90 is directed to a second valve V2. The second valve V2 is a bleeder port that allows a small portion of the nitrogen from the separator 90 to be sent to a nitrogen sensor 96 to measure the purity of the nitrogen. The second valve V2 may be controlled by the controller 70.

When nitrogen is provided upstream of the evaporator 32, the nitrogen enters the interior of the container 10 and forces oxygen and carbon dioxide out of the interior of the container 10. Reducing the oxygen level in the container 10 reduces ripening of produce. Reducing the carbon dioxide level in the container 10 prevents damage to cargo in the container due to high carbon dioxide levels.

In operation, the controller 70 monitors levels of at least one gas inside the container 10, using oxygen sensor 92 and/or carbon dioxide sensor 94 in communication with the controller 70. The oxygen sensor 92 and/or carbon dioxide sensor 94 may be located in the evaporator section 54, upstream of the evaporator 32. To add outside air to the container, the controller 70 sends a signal to turn on the air compressor 80 and sends a signal to the first valve V1 to set the first valve V1 to the open position. This directs the compressed air from the air compressor 80 to the interior of the container 10. To add nitrogen to the container to control the levels of other gasses, the controller 70 sends a signal to turn on the air compressor 80 and closes valve V1. This directs the compressed air from the air compressor 80 to the separator 90, which produces nitrogen that is directed to the interior of the container 10 (e.g., upstream or downstream of the evaporator 32). To measure purity of the nitrogen generated by the separator 90, the controller 70 opens the bleeder port of the second valve V2 to direct a portion of the nitrogen to the nitrogen sensor 96 in communication with the controller 70. Optionally, a separate nitrogen sensor 96 is not used, as the measurements from the oxygen sensor 92 provides an indication of the nitrogen level in the container 10.

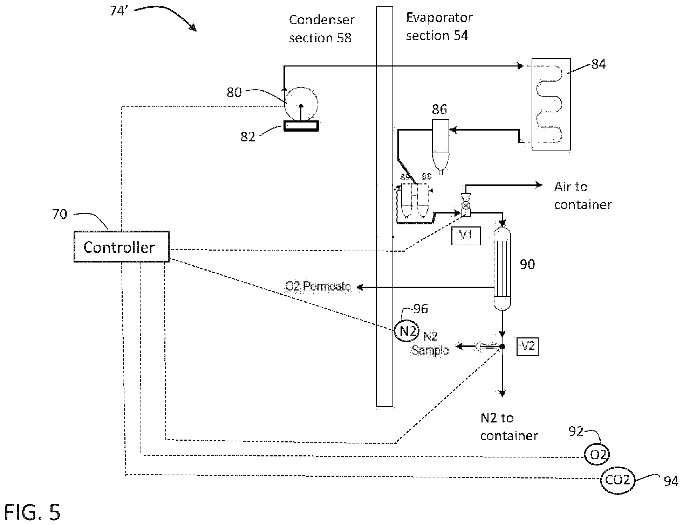

FIG. 5 depicts the atmosphere control system 74' in a variation of the above. The arrangement of FIG. 5 is similar to that of FIG. 4, with the exception that second filter 88 and third filter 89 are located in the evaporator section 54, rather than in the condenser section 58. Operation of the atmosphere control system 74' is similar to that of FIG. 4.

Positioning the air compressor 80 in the condenser section 58 allows use of an air compressor not requiring an enclosed motor and enclosed crankcase, thereby allowing some acceptable amount of air blow (i.e., air leakage due to pressure and movement of the cylinders) from compressor crankcase. If a non-enclosed compressor was placed inside in the evaporator section, air blow from the compressor crankcase would directly impact system performance by not allowing proper control of oxygen. Positioning the air compressor 80 in the condenser section 58 also provides easier access for maintenance on the air compressor 80. A removable shield or plate can be used to protect the air compressor 80 from outside elements such as water and dirt, since the air compressor is located in the condenser section 58 and not inside the container 10. The atmosphere control system 74 is controlled by the same controller 70 used to control the refrigeration unit 24, or by a separate controller.

While the invention has been described in detail in connection with only a limited number of embodiments, it should be readily understood that the invention is not limited to such disclosed embodiments. Accordingly, the invention is not to be seen as limited by the foregoing description, but is only limited by the scope of the appended claims.

## Claims

1. A refrigeration unit (24) for use with a container (10), the refrigeration unit comprising:
a compressor (26), a condenser (28), an expansion device (30) and an evaporator (32) configured to circulate a refrigerant;
a condenser section (58) housing the compressor and the condenser;
an evaporator section (54) housing the evaporator;
an atmosphere control system (74, 74') comprising:
an air compressor (80) configured to generate compressed air;
a separator (90) configured to receive the compressed air and output nitrogen;
a valve (V1) between the air compressor and the separator;
a controller (70) configured to control the valve;
wherein the controller is configured to control the compressor (26),
wherein the valve (V1), in a closed position, directs compressed air to the separator (90), and
wherein the valve (V1), in an open position, directs compressed air to the container (10),
**characterized in that**
the air compressor (80) is located in the condenser section and the separator (90) is located in the evaporator section.

2. The refrigeration unit (24) of any preceding claim further comprising:
a sensor (96) in the evaporator section (54), the sensor configured to measure a level of a gas in the container (10);
wherein the controller (70) is configured to move the valve (V1) between an open position and a closed position in response to the level of the gas in the container.

3. The refrigeration unit (24) of any preceding claim wherein:
the atmosphere control system (74, 74') comprises a heat exchanger (84) positioned between the air compressor (80) and the separator (90), the heat exchanger configured to cool the compressed air from the air compressor.

4. The refrigeration unit (24) of claim 3 wherein:
the atmosphere control system (74, 74') comprises a water separator (86) between the heat exchanger (84) and the separator (90).

5. The refrigeration unit (24) of claim 4 wherein:
the atmosphere control system (74, 74') comprises at least one filter (82) between the water separator (86) and the separator (90).

6. The refrigeration unit (24) of claim 5 wherein:
the at least one filter (82) is located in the condenser section (58).

7. The refrigeration unit (24) of claim 5 wherein:
the at least one filter (82) is located in the evaporator section (54).

## Patentansprüche

1. Kühleinheit (24) zur Verwendung mit einem Behälter (10), wobei die Kühleinheit Folgendes umfasst:
einen Kompressor (26), einen Kondensator (28), eine Expansionsvorrichtung (30) und einen Verdampfer (32), die konfiguriert sind, um ein Kältemittel zu zirkulieren;
einen Kondensatorabschnitt (58), der den Kompressor und den Kondensator aufnimmt;
einen Verdampferabschnitt (54), der den Verdampfer aufnimmt;
ein Atmosphärensteuersystem (74, 74'), umfassend:
einen Luftkompressor (80), der konfiguriert ist, um Druckluft zu erzeugen;
einen Separator (90), der konfiguriert ist, um die Druckluft zu empfangen und Stickstoff auszugeben;
ein Ventil (V1) zwischen dem Luftkompressor und dem Separator;
eine Steuerung (70), die konfiguriert ist, um das Ventil zu steuern;
wobei die Steuerung konfiguriert ist, um den Kompressor (26) zu steuern,
wobei das Ventil (V1) in einer geschlossenen Position Druckluft zum Separator (90) leitet, und
wobei das Ventil (V1) in einer offenen Position Druckluft zum Behälter (10) leitet,
**dadurch gekennzeichnet, dass**
der Luftkompressor (80) sich in dem Kondensatorabschnitt befindet und der Separator (90) sich in dem Verdampferabschnitt befindet.

2. Kühleinheit (24) nach einem der vorhergehenden Ansprüche, ferner umfassend:
einen Sensor (96) in dem Verdampferabschnitt (54), wobei der Sensor konfiguriert ist, um ein Niveau eines Gases in dem Behälter (10) zu messen;
wobei die Steuerung (70) konfiguriert ist, um das Ventil (V1) als Reaktion auf das Niveau des Gases in dem Behälter zwischen einer offenen Position und einer geschlossenen Position zu bewegen.

3. Kühleinheit (24) nach einem der vorhergehenden Ansprüche, wobei:
das Atmosphärensteuersystem (74, 74') einen Wärmetauscher (84) umfasst, der zwischen dem Luftkompressor (80) und dem Separator (90) positioniert ist, wobei der Wärmetauscher konfiguriert ist, um die Druckluft von dem Luftkompressor zu kühlen.

4. Kühleinheit (24) nach Anspruch 3, wobei:
das Atmosphärensteuersystem (74, 74') einen Wasserabscheider (86) zwischen dem Wärmetauscher (84) und dem Separator (90) umfasst.

5. Kühleinheit (24) nach Anspruch 4, wobei:
das Atmosphärensteuersystem (74, 74') mindestens einen Filter (82) zwischen dem Wasserabscheider (86) und dem Separator (90) umfasst.

6. Kühleinheit (24) nach Anspruch 5, wobei:
der mindestens eine Filter (82) sich in dem Kondensatorabschnitt (58) befindet.

7. Kühleinheit (24) nach Anspruch 5, wobei:
der mindestens eine Filter (82) sich in dem Verdampferabschnitt (54) befindet.

## Revendications

1. Unité de réfrigération (24) destinée à être utilisée avec un récipient (10), l'unité de réfrigération comprenant :
un compresseur (26), un condenseur (28), un dispositif de détente (30) et un évaporateur (32) configurés pour faire circuler un réfrigérant ;
une section de condenseur (58) logeant le compresseur et le condenseur ;
une section d'évaporateur (54) logeant l'évaporateur ;
un système de régulation de l'atmosphère (74, 74') comprenant :
un compresseur d'air (80) configuré pour générer de l'air comprimé ;
un séparateur (90) configuré pour recevoir l'air comprimé et produire de l'azote ;
une vanne (V1) entre le compresseur d'air et le séparateur ;
un dispositif de commande (70) configuré pour commander la vanne ;
dans laquelle le dispositif de commande est configuré pour commander le compresseur (26),
dans laquelle la vanne (V1), dans une position fermée, dirige l'air comprimé vers le séparateur (90), et
dans laquelle la vanne (V1), dans une position ouverte, dirige l'air comprimé vers le récipient (10),
**caractérisée en ce que**
le compresseur d'air (80) est situé dans la section de condenseur et le séparateur (90) est situé dans la section d'évaporateur.

2. Unité de réfrigération (24) selon une quelconque revendication précédente comprenant en outre :
un capteur (96) dans la section d'évaporateur (54), le capteur étant configuré pour mesurer un niveau d'un gaz dans le récipient (10) ;
dans laquelle le dispositif de commande (70) est configuré pour déplacer la vanne (V1) entre une position ouverte et une position fermée en réponse au niveau du gaz dans le récipient.

3. Unité de réfrigération (24) selon une quelconque revendication précédente, dans laquelle :
le système de régulation de l'atmosphère (74, 74') comprend un échangeur de chaleur (84) positionné entre le compresseur d'air (80) et le séparateur (90), l'échangeur de chaleur étant configuré pour refroidir l'air comprimé provenant du compresseur d'air.

4. Unité de réfrigération (24) selon la revendication 3, dans laquelle :
le système de régulation de l'atmosphère (74, 74') comprend un séparateur d'eau (86) entre l'échangeur de chaleur (84) et le séparateur (90).

5. Unité de réfrigération (24) selon la revendication 4, dans laquelle :
le système de régulation de l'atmosphère (74, 74') comprend au moins un filtre (82) entre le séparateur d'eau (86) et le séparateur (90).

6. Unité de réfrigération (24) selon la revendication 5, dans laquelle :
le au moins un filtre (82) est situé dans la section de condenseur (58).

7. Unité de réfrigération (24) selon la revendication 5, dans laquelle :
le au moins un filtre (82) est situé dans la section d'évaporateur (54).
